Europäisches Patentamt

European Patent Office

Office européen des brevets

(11) Veröffentlichungsnummer: **0 463 358 A1**

# EUROPÄISCHE PATENTANMELDUNG

(21) Anmeldenummer: **91108092.7**

(22) Anmeldetag: **18.05.91**

(51) Int. Cl.5: **B21D  26/02**, B64D 37/06

(30) Priorität: **29.06.90 DE 4020850**

(43) Veröffentlichungstag der Anmeldung:
**02.01.92 Patentblatt  92/01**

(84) Benannte Vertragsstaaten:
**AT BE CH DE DK ES FR GB GR IT LI LU NL SE**

(71) Anmelder: **Messerschmitt-Bölkow-Blohm GmbH
Robert-Koch-Strasse
W-8012 Ottobrunn(DE)**

(72) Erfinder: **Niedermeier, Franz
Eduard-Schmid-Strasse 35
W-8000 München 90(DE)**
Erfinder: **Weiss, Walter
Rosenstrasse 9
W-8011 Siegertsbrunn(DE)**
Erfinder: **Die anderen Erfinder haben auf ihre Nennung verzichtet**

(54) **Verfahren für die Herstellung grossvolumiger Treibstofftanks.**

(57)  Die Erfindung bezieht sich auf ein Verfahren für die Herstellung großvolumiger Treibstofftanks z.B. für Flugzeuge und Raketen unter Verwendung superplastisch bzw. warmplastisch verformbarer Materialien, wobei plane Membranen in einem Membranrahmen zu einem Tank verschweißt und anschließend durch Warmumformung unter Druck in eine geforderte spannungsoptimale Form gebracht werden, wodurch eine vorspannungsarme und gewichtsverminderte Tankrealisierung gewährleistet wird. Die Erfindung ist anhand eines Ausführungsbeispiels zeichnerisch erläutert.

FIG.2

Die Erfindung bezieht sich auf ein Verfahren zur Herstellung großvolumiger Treibstofftanks unter Verwendung warmplastisch verformbarer Materialien, z.B. für Flugzeuge und Raketen gemäß dem Gattungsbgeriff des Anspruchs 1.

Für die Triebwerke von Hochleistungsflugzeugen, insbesondere von solchen der sogenannten SÄNGER-Unter- und Oberstufe sind als Energieträger Wasserstoff und Sauerstoff vorgesehen. Hierbei müssen für die Oberstufe beide Stoffe und für die Unterstufe nur Wasserstoff in flüssiger Form in entsprechenden Tanks gespeichert und mitgeführt werden. Nun ergeben sich aufgrund der relativ geringen Dichte des flüssigen Wasserstoffes sehr große Volumenerfordernisse für die Tanks, die in einem vorliegenden Fall ungefähr 1.600 m$^3$ betragen. Es ist daher leicht verständlich, daß solche voluminösen Bauteile einen entscheidenden Einfluß auf das Strukturkonzept des Flugzeugrumpfes ausüben. Hinzu kommt noch, daß solche Flüssigwasserstofftanks wegen der SÄNGER-spezifischen technischen Randbedingungen und die erforderlichen Wärmedämmungen äußerst kritische Bauteile darstellen.

Ein Aufbau des Tanks aus gewölbten Membranformen ermöglicht eine Reduktion der Wandstärken und damit des Gewichtes, da die gewölbten Membranformen eine im Betriebsfall nahezu spannungsoptimale Form haben können.

Aus der DE-OS 30 45 417 ist ein Verbundmaterial zur Herstellung von Behältern mit biegsamen Wandungen bekanntgeworden, das sich aus Geweben und Garnen zusammensetzt. Für die Verwendung zur Herstellung der eingangs genannten Tanks ist dieses Material jedoch nicht geeignet.

Aus der DE-OS 31 04 919 ist ein Verfahren zur Herstellung metallischer Gegenstände aus superplastisch deformierbarem Material bekanntgeworden, wobei die verwendeten Bleche auf einen Temperaturbereich aufgeheizt werden, in dem eine superplastische Deformation erfolgt und dann diese Bleche unter Anwendung eines Gasdruckes an bestimmten Stellen gegeneinander gepreßt werden, wobei die sich berührenden Stellen dann miteinander verbunden werden. Dieses Verfahren ist zur Herstellung von großvolumigen Flugzeug- und Treibstofftanks nicht geeignet, denn durch die dann erforderlichen zahlreichen Naht-Schweißungen werden hohe Materialspannungen in die Tankhaut eingebracht, die zu bald auftretenden Rißbildungen und Materialermüdungen führen.

Der vorliegenden Erfindung liegt die Aufgabe zugrunde, ein Verfahren der eingangs genannten Art aufzuzeigen, bei dem die durch die Verformungen und die Verschweißungen auftretenden Restspannungen im Tanksystem weitgehend eliminiert und die Tankgesamtgewichte sowie die Sicherheit und Lebensdauer wesentlich erhöht sind,

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert. Auch die Figuren der Zeichnung dienen der näheren Erläuterung. Es zeigen:

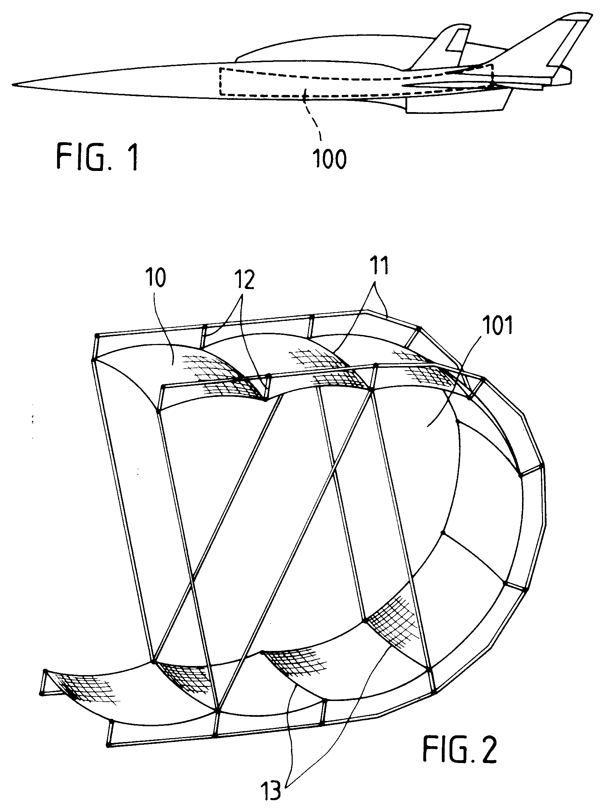

Fig. 1    ein Schemabild einer Seitenansicht eines Flugzeugs mit Triebwerken der SÄNGER-Unter- und Oberstufe mit LH$^2$-Treibstofftank,

Fig. 2    eine perspektivische Teilansicht eines halben Tankquerschnittes einer Breite eines Membranstreifens,

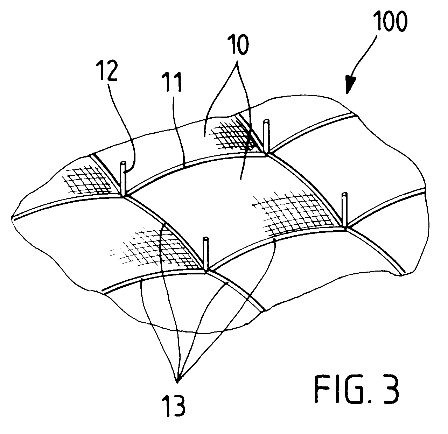

Fig. 3    einen Oberflächenausschnitt des Membrantanks.

Der allgemeine Erfindungsgedanke, der dem nachfolgend beschriebenen Ausführungsbeispiel zugrundeliegt, stellt eine Reduktion der thermomechanischen Spannungen zwischen Struktur und Tank durch Schaffung möglichst freier Längen- und Formänderungen der Tankwand sicher. Innendrücke werden spannungsoptimal durch vorgeformte Membranen aufgenommen, was eine Reduktion der Membranwandstärken erlaubt. Hierzu wird nun vorgeschlagen, daß unter Verwendung warmplastischer verformbarer Materialien auf Form geschnittene plane Membranpaneele 10 an ihren Rändern 13 miteinander verschweißt und in einen Membran-Rahmen 11 eingeschweißt werden. Nach Fertigstellung des Tanks 100 wird dieser unter der für das gewählte Material erforderlichen Temperatur und dem erforderlichen Innendruck warmplastisch verformt, wodurch eine spannungsoptimale Form der Membranen erreicht wird. Anschließend erfährt der Tank einen Abkühlprozeß unter einem Innendruck, bei dem die erzielte Form erhalten bleibt.

Durch dieses Verfahren werden die zwangsläufig auftretenden Restspannungen, hervorgerufen durch Membranumformung und Verschweißung, weitgehend vermindert. Die Schweißverzüge der planen Membranpaneele können bei der Schweißnaht zur vollständigen Schließung des Treibstofftanks wesentlich leichter korrigiert werden als bei gekrümmten Membranpaneelen. Aus Dichtheitsgründen müssen nämlich die sehr dünnwandigen und in ihrer Mitte typischerweise nur etwa 0,5 mm Dicke betragenden Membranpaneele 10 an den Stoßstellen zur Innenstrukturbildung geschweißt werden. Aufgrund der Vielzahl der Schweißnähte, die oft eine Gesamtlänge von mehreren Kilometern erreichen, und vor allem der Überkreuzungspunkte mit den Membranstützen 12 werden hohe Materialspannungen in die Tankhaut eingebracht. Dies führt - wie bereits angeführt - unweigerlich zu beschleunigten Rißbildungen bzw. zu Materialermüdungen. Diese Gefahr ist aber nunmehr durch die oben vorgeschlagenen Maßnahmen beseitigt worden.

Kaltverformung der Membranelemente 10 ist für Al-Bleche möglich, wobei allerdings keine hohen und erforderlichen Formgenauigkeiten aufgrund der Rückfederung entsprechend der Blechdickentoleranz erreicht werden. Entsprechend dem Umformgrad verbleiben Spannungen in den Blechen, die nach dem Paneel-Zuschnitt jedoch zu Formabweichungen führen.

Es zeigt sich also, daß sowohl durch die Vorformung der Membranen wie durch den Schweißprozeß zum Teil beträchtliche Restspannungen im Tank auftreten, welche die Sicherheit während der Lebensdauer von ca. 20 Jahren nachteilig beeinflussen. Dies ist jedoch durch das vorgeschlagene Verfahren - wie bereits ausgeführt - weitestgehend beseitigt worden.

Durch den fachwerkartig ausgebildeten Membranrahmen 11, der an jedem Schnitt- bzw. Kreuzungspunkt mit einer Membranstütze 12 versehen ist, wobei sowohl die Verteilung der Wandstärken der Membranpaneele 10 als auch die Temperaturverteilung über diesen Paneelen inhomogen sein kann, ist ein an die Flugzeugkonzeption leicht anpaßbarer Tankinnenquerschnitt 101 für einen $LH^3$-Membrantank geschaffen worden. Hierbei ist dieses Fertigungsverfahren für superplastisch bzw. warmplastisch verformbare Materialien besonders geeignet und zwar besonders für Titanlegierungen und wenn die Umformgrade nicht wesentlich höher als 10% betragen auch für andere Werkstoffe.

**Patentansprüche**

1. Verfahren für die Herstellung großvolumiger Treibstofftanks unter Verwendung warmplastisch verformbarer Materialien, **dadurch gekennzeichnet, daß**

    a) auf Form geschnittene plane Membranpaneele (10) an ihren Rändern (13) miteinander verschweißt und in einen dem zu erstellenden Tankquerschnitt entsprechend ausgebildeten Membranrahmen (11) eingeschweißt werden,

    b) der so erhaltene Treibstofftank (100) einer Temperatur und dem Innendruck zum Erzeugen warmplastischer Verformung ausgesetzt wird und

    c) anschließend unter dem entsprechenden Innendruck, bei dem die erreichte warmplastische Form erhalten bleibt, abgekühlt wird

2. Verfahren nach Anspruch 1, **dadurch gekennzeichnet, daß** der Membran-Rahmen fachwerkartig ausgebildet und an Schnitt- bzw. Kreuzungspunkten mit einer Membranstütze (12) versehen ist.

3. Verfahren nach den Ansprüchen 1 und/oder 2, **dadurch gekennzeichnet,** daß die Wandstärken der Membranpaneele (10) und/oder die Temperaturen über den Membranpaneelen zum inneren Kräfteausgleich gezielt variiert werden.

4. Verfahren nach einem oder mehreren der Ansprüche 1 bis 3 **dadurch gekennzeichnet,** daß der Treibstofftank (100) vor der warmplastischen Verformung zur Verminderung der durch die Verschweißungen entstandenen Spannungen einer Warmbehandlung unterzogen wird.

5. Verfahren nach einem oder mehreren der Ansprüche 1 bis 4, **dadurch gekennzeichnet,** daß die Tankmembranen ein Fachwerk umschließen, das an spezifischen Schnitt- bzw. Kreuzungspunkten des Membranrahmens auf der Tankinnenseite befestigt ist.

6. Verfahren nach einem oder mehreren der Ansprüche 1 bis 5, **dadurch gekennzeichnet,** daß als warmplastisch verformbares Material Titanlegierungen verwendet werden.

7. Verfahren nach einem oder mehreren der Ansprüche 1 bis 5, **dadurch gekennzeichnet,** daß als warmplastisch verformbares Material Aluminiumlegierungen verwendet werden.

8. Verfahren nach dem Anspruch 1, **dadurch gekennzeichnet,** daß als Verbindung zwischen Membranpaneelen und Membranrahmen andere Verfahren wie z.B. Nieten, Diffusions-Schweißen, Diffusions-Löten etc. gewählt werden.

EP 0 463 358 A1

FIG. 1

100

10   12   11

101

FIG. 2

13

4

FIG. 3

Europäisches Patentamt

**EUROPÄISCHER RECHERCHENBERICHT**

Nummer der Anmeldung

EP 91108092.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| A | DE - A1 - 2 361 215 (VOLKSWAGENWERK AG) * Anspruch 1,20; Seite 7, letzter Absatz; Fig. 1a,1b * | 1,8 | B 21 D 26/02 B 64 D 37/06 |
| A | DE - A1 - 2 426 601 (ALTER LICENSING ESTABLISHMENT) * Ansprüche 1,2; Fig. 7,8 * | 1,7 | |
| A | US - A - 4 026 503 (RHODES) * Ansprüche 1-3; Fig. 6,14 * | 2 | |
| A | EP - A2 - 0 138 120 (THE BOEING COMPANY) * Ansprüche 1-7; Fig. 1,5 * | 2,5 | |
| A | DE - A1 - 1 901 767 (ATLAS MAK MASCHINENBAU GMBH) * Seite 4, 3. Absatz * ---- | 6 | |

| | | | RECHERCHIERTE SACHGEBIETE (Int. Cl.5) |
|---|---|---|---|
| | | | B 21 D 26/00 B 21 D 51/00 B 64 D 37/00 |

Der vorliegende Recherchenbericht wurde für alle Patentansprüche erstellt.

| Recherchenort | Abschlußdatum der Recherche | Prüfer |
|---|---|---|
| WIEN | 01-10-1991 | BISTRICH |